# FASCICULE DE BREVET EUROPEEN

(11) **EP 0 448 493 B1**
(45) Date de publication et mention de la délivrance du brevet: **02.08.1995**
(21) Numéro de dépôt: 91460014.3
(22) Date de dépôt: 19.03.1991
(51) Int. Cl.: H04N 7/24

(54) **Procédé de diffusion flexible de séquences d'images vers des mobiles, et récepteur correspondant**
Flexibles Übertragungsverfahren von Bildsequenzen zu mobilen Stationen und entsprechender Empfänger
Flexible broadcasting method of image sequences towards mobile stations and receiver therefor

(30) Priorité: 23.03.1990 FR 9003928
(43) Date de publication de la demande: 25.09.1991
(73) Titulaire: FRANCE TELECOM, 75015 Paris (FR); TELEDIFFUSION DE FRANCE S.A., 92542 Montrouge Cédex (FR)
(72) Inventeur: Pommier, Daniel, F-35310 Breal-sous-Montfort (FR); Guinet, Yves, F-75016 Paris (FR); Sabatier, Jacques, F-78230 Le Pecq (FR)
(74) Mandataire: Corlau, Vincent

(56) Documents cités:
- DE-C- 3 841 173
- FR-A- 2 604 316
- US-A- 3 980 830
- IEEE TRANSACTIONS ON CONSUMER ELECTRONICS, vol. CE-23, no. 3, août 1982, pages 437-445, IEEE, New York, US; I. YASHIMA et al.: "Development of the TV receiver for cars"

## Description

Le domaine de l'invention est celui de la diffusion de séquences d'images numériques, et en particulier de signaux de télévision, vers des mobiles.

L'invention s'applique notamment à la transmission d'images numériques d'une part vers des mobiles se déplaçant à faible vitesse, exigeant une qualité d'image reçue élevée, et d'autre part vers des mobiles se déplaçant rapidement.

Par mobiles, on entend tout type de récepteurs susceptibles d'être déplacés, du récepteur domestique portable au récepteur embarqué dans un véhicule.

Une autre application de l'invention est l'adaptation du signal reçu au type de récepteurs, et plus précisément à la largeur d'écran de ces récepteurs.

On connaît déjà de nombreux systèmes de diffusion de données numériques, susceptibles d'être appliqués à la télévision numérique.

Comme il n'existe pas de canal de transmission permettant d'assurer un débit compatible avec celui nécessaire pour des séquences d'images transmises en temps réel, ces systèmes comprennent des moyens de réduction de débit du signal à transmettre, notamment en exploitant les redondances existant dans les séquences d'images.

Ces systèmes permettent d'assurer la réception d'images de bonne qualité dans des récepteurs fixes. En revanche, ils ne peuvent pas garantir une réception fiable dans des décodeurs mobiles. En effet, les récepteurs mobiles sont soumis à de nombreuses contraintes, d'une part à cause de l'effet Doppler introduit pas le déplacement, et d'autre part en raison des problèmes de multipropagation, engendrant des phénomènes d'évanouissement, et des parasites et brouilleurs, qui existent en particulier en milieu urbain. Il est donc nécessaire d'utiliser des techniques de codage plus robustes, ce qui se traduit évidemment par une perte de débit. Dans les conditions actuelles, les débits envisageables sont insuffisants pour assurer de façon satisfaisante la diffusion d'images numériques en temps réel vers des mobiles.

L'invention a pour objectif de pallier cet inconvénient.

Plus précisément, l'invention a pour objectif de fournir un procédé de diffusion de signaux d'images numériques, permettant une réception optimale dans des mobiles, quelle que soit leur vitesse de déplacement.

D'autre part, il est vraisemblable que l'utilisation de récepteurs de télévision mobiles s'effectuera dans une grande diversité de conditions de visualisation. Plus précisément, on imagine très bien que les récepteurs mobiles pourront présenter une taille d'écran allant de la montre-bracelet au micro-ordinateur portable. Le spectateur pourra, suivant les cas, se trouver à distance lointaine ou très rapprochée de l'écran. Le récepteur pourra posséder des modules de traitement plus ou moins sophistiqués. La vitesse de déplacement du récepteur s'échelonnera entre celle de la marche à pieds et celle des engins balistiques de transport intercontinental...

En conséquence, le coeur de l'invention se trouve également dans l'idée de concevoir un procédé de transmission de signaux de données d'images transmettant plusieurs niveaux de qualité d'image sélectivement "récupérables" et utilisables par le récepteur en fonction des conditions de réception et de visualisation.

Le cas échéant, la capacité du récepteur mobile à utiliser telle ou telle portion des données transmises est soit prédéterminée définitivement dans la constitution de l'appareil, soit adaptative en fonction des configurations de réception.

L'invention a également pour objectif de fournir des dispositifs d'enregistrement d'images numériques dans des mobiles sous au moins deux niveaux de qualité, en fonction de la vitesse de déplacement.

Les caractéristiques de l'invention sont décrites dans les revendications.

De cette façon, la discrimination au sein des données de plusieurs jeux de données permet une exploitation sélective d'un seul ou de plusieurs de ces jeux de données au récepteur, en fonction des conditions de réception et de visualisation.

On utilise par ailleurs la robustesse de ce type de transmission par multiplex de porteuses orthogonales (par exemple la technique dite COFDM), dont on constate qu'elle est compatible avec le principe de discriminer plusieurs jeux de données dans le signal d'origine, en raison de l'indépendance des porteuses constituant le multiplex.

Avantageusement, la répartition desdits éléments de données d'image en jeux de données distincts est effectuée selon un critère d'importance psychovisuelle.

D'autre part, dans un mode de réalisation préférentiel des récepteurs, ceux-ci comportent des moyens de prise en compte sélective d'un ou plusieurs desdits jeux de données en fonction d'au moins un des critères appartenant au groupe comprenant la taille et/ou la définition de l'écran du récepteur, et la capacité et/ou la vitesse de traitement des données au récepteur.

Par ailleurs, dans certains modes de réalisation, il est avantageux que les récepteurs comprennent des moyens de sélection adaptative des jeux d'éléments de données utilisés pour reconstruire les images, notamment en fonction de la vitesse de déplacement du mobile et/ou du rapport signal à bruit du canal de transmission.

D'autres caractéristiques et avantages de l'invention apparaîtront à la lecture suivante d'un mode de réalisation particulier de l'invention, donné à titre illustratif et non limitatif, et des dessins annexés, dans lesquels :
- la figure 1 est un synoptique d'un émetteur selon le procédé de l'invention, dans le cas d'une répartition des éléments de données à transmettre en deux jeux distincts ;
- la figure 2 présente le synoptique d'un récepteur d'images numériques diffusés par l'émetteur de la figure 1, n'utilisant qu'un seul jeu d'éléments de données ;
- la figure 3 est le synoptique d'un récepteur d'images numériques diffusées par l'émetteur de la figure 1, et utilisant l'ensemble des données transmises.

Partant du double constat que, d'une part, la taille des écrans de récepteurs de télévision mobiles couvre une très large gamme, ne nécessitant pas des définitions d'images identiques, et que, d'autre part, les conditions de réception dans lesquelles sont utilisés ces récepteurs sont très variables, notamment en terme de vitesse de déplacement, l'invention propose un procédé visant à permettre une réception adaptée aux différents cas de figures pouvant se présenter.

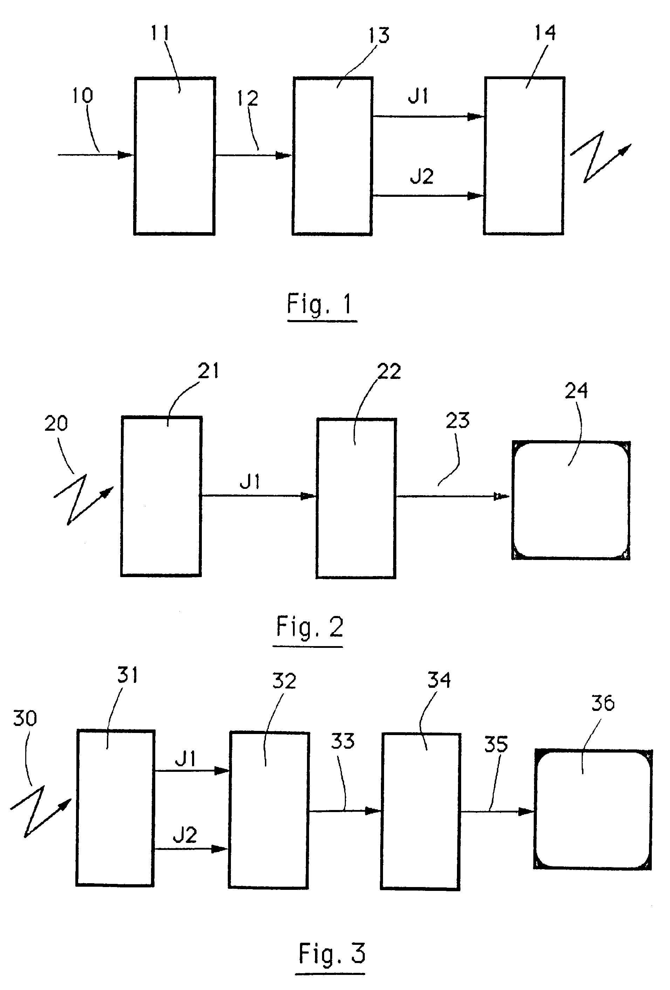

Pour cela, on répartit les données à transmettre en au moins deux jeux de données distincts. La figure 1 présente un synoptique général d'un émetteur selon le procédé de l'invention, dans le cas d'une répartition entre deux jeux de données J1 et J2. Toutefois, il est clair que l'invention ne se limite pas à ce cas, et qu'il est possible de traiter de la même façon un nombre plus important de jeux de données.

Les données d'images 10 sont soumises à un module 11 de codage de l'image, dont l'objectif est de réduire le débit des données à transmettre. Ce module 11 réalise notamment un compactage de l'information, par exemple en utilisant les redondances existant dans l'image ou la séquence d'images, une quantification des données compactées, et l'attribution à chaque valeur quantifiée d'un mot de code.

Ces opérations sont classiques du codage d'images. On connaît de nombreuses façons de les mettre en oeuvre.

Les éléments de données 12 issus du module 11 de codage sont ensuite répartis en deux jeux de données J1 et J2, par un module 13 de répartition.

Avantageusement, cette répartition est assurée selon un critère psychovisuel. Dans ce cas, le jeu de données J1 comprend essentiellement des données de base, permettant de reconstruire une image de qualité acceptable, et le second jeu J2 des données complémentaires, permettant d'affiner l'image reconstruite à partir du seul jeu J1.

Les deux jeux de données J1 et J2 sont ensuite multiplexés et émis, par un codeur du type COFDM. Il est également possible de multiplexer et d'émettre ces deux jeux de données de toute autre façon connue, notamment par l'intermédiaire d'une seule fréquence porteuse.

Le codage COFDM (Coding Orthogonal Frequency Division Multiplex (Multiplexage de Fréquences Orthogonales Codées)), tel que décrit dans les demandes de brevets françaises 86 09622 du 2 juillet 1986, et 86 13271 du 23 septembre 1986 au nom de l'Etat Français et de Télédiffusion de France, a déjà été utilisé pour la radiodiffusion sonore numérique vers des mobiles.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence f- temps t et à émettre simultanément des jeux d'éléments numériques sur N voies de diffusion parallèles au moyen d'un multiplex de fréquences utilisant des porteuses orthogonales. En particulier, ce type de modulation permet d'éviter que deux éléments successifs du train de données soient émis à la même fréquence.

Le processus de codage connu vise dans son ensemble à permettre le traitement des échantillons issus du démodulateur pour absorber l'effet des variations d'amplitude du signal reçu, dues au processus de Rayleigh. Le codage est avantageusement un codage convolutif, éventuellement concaténé à un codage du type Reed-Solomon. Le décodage peut être avantageusement un décodage de Viterbi à décision douce.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

Ce système permet donc la diffusion de signaux numériques dans des canaux affectés de trajets multiples dont les caractéristiques varient dans le temps. Notamment, il permet de recevoir dans de bonnes conditions des données numériques dans des mobiles en milieu urbain.

Dans ce cas, il est possible d'attribuer un jeu de fréquences-porteuses particulier à chacun des jeux de données J1 et J2. Ainsi, les décodeurs simples disposent de moyens de décoder les fréquences-porteuses du seul jeu de porteuses correspondant au premier jeu de données J1. En revanche, les décodeurs complets décodent l'ensemble des N fréquences-porteuses.

La figure 2 présente le synoptique d'un récepteur simple, c'est-à-dire utilisant le seul jeu de données J1. Ce type concerne essentiellement les récepteurs à écran de petite taille, et/ou à coût de fabrication réduit et/ou destinés à être utilisés à des vitesses élevées et/ou à capacité de traitement limitée.

Le signal 20 reçu est démultiplexé et décodé, dans un décodeur COFDM 21 classique, qui ne démodule que les porteuses assignées au jeu de données J1. Ce jeu de données J1 permet, dans un module 22 de décodage, de reconstruire des images 23, visualisées sur l'écran 24. Ces images seront bien entendu de qualité inférieure à celles émises. Toutefois, si la répartition entre les jeux J1 et J2 est réalisée de façon judicieuse, notamment sur critère psychovisuel, les images 23 seront d'une qualité satisfaisante, en particulier sur un écran de petite taille.

La figure 3 présente le synoptique d'un récepteur complet, exploitant les deux jeux de données transmis J1 et J2.

Ce récepteur réalise, à partir du signal 30 reçu, un codage COFDM 31 identique à celui réalisé par le récepteur de la figure 2. Toutefois, ce décodage effectue la démodulation de l'ensemble des porteuses du multiplex, fournissant les deux jeux de données J1 et J2 à un module 32 de regroupement de l'ensemble des données 33 constituant une image. Ces données 33 permettent d'obtenir, après décodage 34, des images 35 de qualité équivalente à celles disponibles à l'émission, sur un écran de visualisation 36.

Cette séparation en deux trains binaires permet également de définir de nouveaux moyens de stockage d'images, notamment du type magnétoscope ou disque optique, à deux niveaux de qualité. En effet, selon le niveau de qualité requis, il est possible de mémoriser soit le seul premier jeu de données J1, soit les deux jeux de données J1 et J2, au prix d'une consommation d'espace mémoire supérieure. En d'autres termes, des images dont la qualité n'a que peu d'importance pourront être stockées en ne conservant que l'information essentielle du jeu de données J1, réduisant ainsi la place occupée sur le support, alors que les images de haute qualité seront mémorisées de façon complète.

Il est clair que les données d'images peuvent être réparties en plus de deux jeux, de la même façon, permettant de définir autant de types de récepteurs et de niveaux de qualité d'enregistrement.

Une autre caractéristique avantageuse de l'invention est la possibilité de définir des récepteurs dans lesquels il est possible de choisir l'un ou l'autre des types de réception, c'est-à-dire le seul jeu J1 ou l'ensemble des deux jeux J1 et J2. Cette sélection peut éventuellement être rendue automatique, par exemple en fonction de la vitesse de déplacement.

## Revendications

1. Procédé de diffusion à deux niveaux de qualité de séquences d'images numériques (10) vers des mobiles,
caractérisé en ce qu'il comprend les étapes suivantes :
- codage numérique unique (11) d'un signal d'images source (10), délivrant une série unique (12) d'éléments de données codés ;
- répartition (13) desdits éléments de données codées formant ladite série unique (12) en au moins deux jeux complémentaires (J1,J2) d'éléments de données codés ;
- affectation à chacun desdits jeux (J1, J2) d'éléments de données codés d'un sous-ensemble distinct de fréquences porteuses sélectionnées dans un multiplex de fréquences porteuses orthogonales destinées à être émises simultanément sous la forme d'un signal émis unique ;
- modulation (14) de chacune desdites fréquences porteuses par des éléments de données codées, chaque sous-ensemble de fréquences porteuses recevant des éléments de données codés appartenant au jeu d'éléments de données codés correspondant ;
- transmission (14) dudit multiplex (20 ; 30) de fréquences porteuses ;
de façon que, dans des premiers récepteurs, par exemple du type récepteur à écran de petite taille, on reconstruise des images (23) de qualité standard, selon les étapes suivantes :
- réception (21) dudit multiplex (20) de fréquences porteuses, et démodulation des seules fréquences porteuses affectées à un premier desdits jeux (J1) d'éléments de données codés ;
- décodage unique (22) desdits éléments de données codés appartenant audit premier jeu (J1), de façon à délivrer des images (23) de qualité standard sur un écran (24) ;
et, dans des seconds récepteurs, par exemple du type récepteur à écran de taille plus importante, on reconstruise des images (35) de qualité supérieure, selon les étapes suivantes :
- réception (31) dudit multiplex (30) de fréquences porteuses, et démodulation des fréquences porteuses affectées aux deux jeux (J1, J2) d'éléments de données codés ;
- regroupement (32) desdits jeux (J1, J2) d'éléments de données codées, de façon à délivrer la série complète (33) desdits éléments de données codés ;
- décodage unique (34) de ladite série complète (33) éléments de données codés, de façon à délivrer des images (33) de qualité supérieure (35) sur un écran (36).

2. Procédé selon la revendication 1, caractérisé en ce que la répartition (13) desdits éléments (12) de données d'image en jeux (J1,J2) d'éléments de données distincts est effectuée selon un critère d'importance psychovisuelle.

3. Récepteur de séquences d'images numériques diffusées selon le procédé de l'une quelconque des revendications 1 ou 2, caractérisé en ce qu'il comporte des moyens de prise en compte sélective d'un ou plusieurs desdits jeux (J1,J2) d'éléments de données en fonction d'au moins un des critères appartenant au groupe comprenant la taille et/ou la définition de l'écran du récepteur, et la capacité et/ou la vitesse de traitement des données au récepteur.

4. Récepteur selon la revendication 3, caractérisé en ce qu'il comprend des moyens de sélection adaptative des jeux (J1,J2) d'éléments de données utilisés pour reconstruire les images, en fonction de la vitesse de déplacement du mobile et/ou de la réponse signal à bruit du canal de transmission.

5. Récepteur selon l'une quelconque des revendications 3 ou 4, caractérisé en ce qu'il comprend des moyens d'enregistrement desdites séquences d'images numériques sous au moins deux formes, chacune desdites formes d'enregistrement correspondant à l'enregistrement d'une sélection différente des jeux (J1,J2) d'éléments de données.

## Claims

1. Method of broadcasting, with two levels of quality, digital image sequences (10) to mobiles, characterized in that it comprises the following steps:
- single digital coding (11) of a source image signal (10), yielding a single series (12) of coded data elements;
- distributing (13) of the said coded data elements forming the said single series (12) into at least two complementary sets (J1, J2) of coded data elements;
- assigning to each of the said sets (J1, J2) of coded data elements a distinct subset of carrier frequencies selected from a multiplex of orthogonal carrier frequencies intended to be transmitted simultaneously in the form of a single transmitted signal;
- modulation (14) of each of the said carrier frequencies by coded data elements, each subset of carrier frequencies receiving coded data elements belonging to the corresponding set of coded data elements,
- transmission (14) of the said multiplex (20; 30) of carrier frequencies;
so that, in first receivers, for example of the receiver with small-size screen type, images (23) of standard quality are reconstructed according to the following steps:
- reception (21) of the said multiplex (20) of carrier frequencies, and demodulation of only the carrier frequencies assigned to a first of the said sets (J1) of coded data elements;
- single decoding (22) of the said coded data elements belonging to the said first set (J1), so as to yield images (23) of standard quality on a screen (24);
and, in second receivers, for example of the receiver with larger-size screen type, images (35) of higher quality are reconstructed according to the following steps:
- reception (31) of the said multiplex (30) of carrier frequencies, and demodulation of the carrier frequencies assigned to the two sets (J1, J2) of coded data elements;
- grouping (32) of the said sets (J1, J2) of coded data elements so as to yield the complete series (33) of the said coded data elements;
- single decoding (34) of the said complete series (33) of coded data elements, so as to yield images (33) of higher quality (35) on a screen (36).

2. Process according to Claim 1, characterized in that the distributing (13) of the said image data elements (12) into sets (J1, J2) of distinct data elements is performed according to a criterion of psycho-visual importance.

3. Receiver of digital image sequences broadcast according to the method of either one of Claims 1 or 2, characterized in that it includes means for selectively taking account of one or more of the said sets (J1, J2) of data elements as a function of at least one of the criteria belonging to the group comprising the size and/or the definition of the screen of the receiver, and the capacity and/or speed of processing of the data at the receiver.

4. Receiver according to Claim 3, characterized in that it comprises means for adaptively selecting the sets (J1, J2) of data elements used to reconstruct the images, as a function of the speed of movement of the mobile and/or of the signal-to-noise response of the transmission channel.

5. Receiver according to either one of Claims 3 or 4, characterized in that it comprises means for recording the said digital image sequences in at least two forms, each of the said forms of recording corresponding to the recording of a different selection of the sets (J1, J2) of data elements.

## Patentansprüche

1. Verfahren für die Übertragung digitaler Bildfolgen (10) mit zwei Qualitätsebenen zu beweglichen Empfängern, dadurch gekennzeichnet, daß es die folgenden Schritte umfaßt:
- einmaliges digitales Kodieren (11) eines Quellbildsignals (10), das eine einzige Reihe (12) kodierter Elemente ergibt;
- Verteilung (13) der kodierten Datenelemente, welche die einzige Reihe (12) bilden, über mindestens zwei sich vervollständigende Sätze (J1, J2) kodierter Datenelemente;
- Zuordnung, zu jedem dieser Sätze (J1, J2) kodierter Datenelemente, einer unterschiedlichen Untermenge von Trägerfrequenzen, die aus einem Multiplex orthogonaler Trägerfrequenzen ausgewählt werden, die gleichzeitig in Form eines einzigen gesendeten Signals übertragen werden sollen;
- Modulierung (14) einer jeden dieser Trägerfrequenzen durch kodierte Datenelemente, wobei jedes Unterelement von Trägerfrequenzen kodierte Datenelemente empfängt, die dem entsprechenden Satz kodierter Daten angehören;
- Übertragung (14) des Multiplex (20; 30) von Trägerfrequenzen;
derart, daß in ersten Empfängern, beispielsweise Kleinbildschirmgeräten, gemäß der folgenden Schritte Bilder von Standardqualität (23) wiedergegeben werden:
- Empfang (21) des Trägerfrequenzenmultiplex (21) und alleinige Demodulierung der Trägerfrequenzen, die einem ersten Satz (J1) kodierter Datenelemente zugeordnet sind;
- alleinige Dekodierung (22) der kodierten Datenelemente, die dem ersten Satz (j1) angehören, um Bilder von Standardqualität (23) auf dem Bildschirm (24) darzustellen;
und, daß in zweiten Empfängern, beispielsweise Geräten mit größerem Bildschirm, gemäß der folgenden Schritte Bilder (35) besserer Qualität wiedergegeben werden:
- Empfang (31) des Trägerfrequenzenmultiplex (30) und Demodulierung der Trägerfrequenzen, die den zwei Sätzen (J1, J2) kodierter Datenelemente zugeordnet sind;
- Zusammenfügung (32) der Sätze (J1, J2) kodierter Datenelemente, um die komplette Reihe (33) kodierter Datenelemente abzugeben;
- alleiniges Dekodieren (34) der vollständigen Reihe (33) kodierter Datenelemente, um Bilder (33) von höherer Qualität (35) auf einem Bildschirm (36) wiederzugeben.

2. Verfahren gemäß Anspruch 1,
dadurch gekennzeichnet, daß die Verteilung (13) der Bilddatenelemente (12) in Sätzen (J1, J2) verschiedener Datenelemente nach einem Kriterium psycho-visueller Bedeutung erfolgt.

3. Empfänger digitaler Bildfolgen, die nach dem Verfahren aus einem der Ansprüche 1 oder 2 gesendet wurden,
dadurch gekennzeichnet, daß er über Mittel zur selektiven Berücksichtigung eines oder mehrerer des (der) Datenelementsatzes (-sätze) (J1, J2) verfügt, als Funktion von mindestens einem der Kriterien aus der Gruppe, welche die Größe und/oder die Auflösung des Empfangsbildschirms umfaßt sowie der Kapazität und/oder der Geschwindigkeit der Datenverarbeitung im Empfänger.

4. Verfahren gemäß Anspruch 3,
dadurch gekennzeichnet, daß es über adaptative Auswahlmittel der Daten-elementsätze (J1, J2) verfügt, die zur Wiederherstellung der Bilder angewandt werden, als Funktion der Geschwindigkeit des bewegten Objektes und/oder der Signal/Rausch-Antwort des Übertragungskanals.

5. Empfänger gemäß einem der Ansprüche 3 oder 4,
dadurch gekennzeichnet, daß er über Mittel zum Aufzeichnen der digitalen Bildfolgen in mindestens zwei Formen verfügt, wobei jede dieser Aufzeichnungsformen der Aufzeichnung einer verschiedenen Auswahl der Datenelementsätze (J1, J2) entspricht.
